# EUROPÄISCHE PATENTSCHRIFT

(11) **EP 3 172 506 B1**
(45) Veröffentlichungstag und Bekanntmachung des Hinweises auf die Patenterteilung: **30.10.2019**
(21) Anmeldenummer: 15747354.7
(22) Anmeldetag: 21.07.2015
(51) Int. Cl.: F25C 5/12

(54) **VORRICHTUNG ZUR ERZEUGUNG VON SCHNEE**
DEVICE FOR PRODUCING SNOW
DISPOSITIF POUR LA PRODUCTION DE NEIGE

(30) Priorität: 22.07.2014 AT 5822014
(43) Veröffentlichungstag der Anmeldung: 31.05.2017
(73) Patentinhaber: Troissinger, Peter, 8361 Hatzendorf (AT); Schöllauf, Peter Manuel, 8010 Graz (AT); Ressi, Manuel, 9620 Hermagor (AT)
(72) Erfinder: TROISSINGER, Peter, 8361 Hatzendorf (AT)
(74) Vertreter: Fox, Tobias
(86) Internationale Anmeldenummer: PCT/AT2015/000100
(87) Internationale Veröffentlichungsnummer: WO 2016/011467

(56) Entgegenhaltungen:
- WO-A1-2013/020179
- CH-A- 368 907
- FR-A- 634 732
- JP-A- 2000 300 448
- JP-U- S60 134 445
- US-A- 683 299
- US-A- 1 537 548
- US-A- 1 722 031
- US-A- 1 799 963
- US-B1- 6 813 997

## Beschreibung

Die Erfindung betrifft eine Vorrichtung zur Erzeugung von Schnee mit einer Raspel und einem in Richtung der Raspel wiederholt verschiebbaren Stempel, wobei auf die Raspel ein Eis-Stück mittels des Stempels drückbar ist, und wobei die Raspel und das Eis-Stück in einer Relativbewegung zueinander bringbar sind. Die Erfindung betrifft ferner eine elektrische Maschine zur Erzeugung von Schnee basierend auf dem gleichen Prinzip sowie ein Verfahren zur Erzeugung von Schnee.

Im gastronomischen Bereich gibt es einen kontinuierlichen Bedarf an neuen oder neuartig gestalteten Lebensmitteln. So ist es im Stand der Technik bekannt, nicht nur Eiscreme herzustellen, sondern auch eßbaren Schnee auf Wasserbasis mit Zusatzstoffen, die für Farbe, Geschmack und Süße sorgen.

Bei Speiseeis steht die Cremigkeit an oberster Stelle. Sie kann bei konventionell hergestelltem Speiseeis dadurch erreicht werden, daß dem Speiseeis Emulgatoren oder Stabilisatoren zugefügt werden.

Das Einsetzen von Zusatzstoffen, wie Emulgatoren oder Stabilisatoren, entspricht nicht den Wünschen des gesundheitsbewußten Verbrauchers. Wie auch in anderen Sparten der Lebensmittelindustrie herrscht auch in der Eisbranche der Wunsch nach Speiseeis ohne künstliche Zusatzstoffe.

Die US 5,050,809 zeigt eine Maschine zur Erzeugung von zerkleinertem Eis. Dazu wird gefrorenes Eis auf eine rotierende und motorisch angetriebene. Trommel mit einer Vielzahl von Klingen geführt. Nachteilig ist hierbei, daß nur eine Ansammlung von kleinen Eis-Stücken erzeugt wird.

Die GB 374673 offenbart eine Vorrichtung zur Erzeugung von Schnee oder Speiseeis. Dafür wird ein Kühlgas mit einer Flüssigkeit in einem handbetriebenen Mixer intensiv und schnell vermischt. Nachteilig ist dabei, daß die Vorrichtung aufwendig zu befüllen und der Schnee aufwendig zu entnehmen ist.

Die JP 2002/000191 A lehrt ein Verfahren zur Herstellung von Speiseeis eines schneeartigen Zustandes. Dabei wird ein Eis-Stück in dünne Scheiben geschnitten. Nachteilig ist die unbekannte Handhabung des Eis-Stückes beim Zuführen zu einer entsprechenden Vorrichtung sowie der Handhabung des Eis-Stückes während des Schneidevorganges.

Die US 5,242,125 befaßt sich mit einem tragbaren Schnee-Erzeugungsgerät. Dazu wird gefrorenes Wassereis auf eine rotierende und motorisch angetriebene Trommel mit einer Vielzahl von Klingen geführt. Der Nachteil dieser Lehre besteht darin, daß die Menge des zu verarbeitenden Eises per Hand festgelegt und in das Gerät eingesetzt werden muß.

Die WO 2013/020179 A1, US 6813997 B1 und US 1722031 A zeigen elektrische Maschinen zum Zerkleinern von Obst, Gemüse oder Eis, die jeweils ein Aufnahmefach besitzen, in welchem das zu zerkleinernde Gut mittels Stempel auf eine bewegliche Raspelscheibe gepreßt wird. Nachteilig ist hier, daß die Portionierung von Hand erledigt werden muß.

Die CH 368907 A, FR 634732 A, US 683299 A, US 1537548 A, JP S60134445 U, JP 2000300448 A und US 1799963 A offenbaren Handraspelgeräte für Gemüse oder Hartkäse, bei welchen ein nach unten offenes Behältnis in Relativbewegung zu einer darunterliegenden Raspelscheibe oder Raspelfläche gebracht wird. Nachteilig ist auch hier, daß die Portionierung des Raspelguts individuell erfolgen muß. Zudem ist das Behältnis nach jeder Benutzung zu reinigen, da es mit dem Raspelgut in Berührung gekommen ist.

Die Erfindung zielt darauf ab, eine Vorrichtung wie eingangs angeführt zu schaffen, welche es ermöglicht, einfach und schnell aus einem Eis-Stück eine Portion Schnee herzustellen sowie einfach und schnell die Vorrichtung betriebsbereit zu halten oder für einen weiteren Schnee-Erzeugungsvorgang zu präparieren. Weiterhin ist es ein Ziel der Erfindung, bei der Herstellung einer gefrorenen Speise Energie zu sparen. Die erfindungsgemäße Vorrichtung erreicht dies dadurch, daß sie ein Halteelement, wie beispielsweise einen Führungszylinder, aufweist, in welchen ein zur Raspel hin offenes Gebinde, in welchem sich das Eis-Stück befindet, einsetzbar ist, und wobei zwischen Halteelement und Raspel eine Grundplatte angeordnet ist, auf welcher das Gebinde abstützbar und gegen den Druck des Stempels haltbar ist. Das erfindungsgemäße Verfahren erreicht dies durch die Schritte: Einsetzen eines nach einer Seite hin offenen Gebindes, in welchem sich ein Eis-Stück befindet, in ein Halteelement, Pressen eines Stempels auf das Gebinde und pressendes Bewegen des Eis-Stückes aus einer Öffnung des Gebindes in Richtung einer Raspel heraus, Erzeugen einer Relativbewegung der Raspel zum Gebinde, und Auffangen des aus der Raspel fallenden Schnees mit einem becherartigen Gefäß oder einem flächigen -Geschirr.

Eine bevorzugte Ausführungsform der Vorrichtung zeichnet sich dadurch aus, daß die Raspel und/oder der Stempel motorisch antreibbar sind.

In einer Ausführungsform der Erfindung ist die Raspel flächig ausgeführt und schwingend bewegbar.

Zur weiteren Ausgestaltung der Erfindung ist die Raspel als Trommel ausgeführt und rotierend bewegbar.

Bevorzugt ist in einer Ausgestaltung der Erfindung, daß die Raspel als Kreisscheibe ausgeführt und rotierend bewegbar ist.

Eine bevorzugte Ausführungsform der Vorrichtung zeichnet sich außerdem dadurch aus, daß das Halteelement motorisch antreibbar ist.

In einer Ausführungsform der Erfindung weist der Stempel eine auf das Gebinde und/oder das Eis-Stück drückende Oberfläche auf, die plan, konkav oder konvex ausgeführt ist. Die erfindungsgemäße elektrische Maschine zur Erzeugung von Schnee weist eine erfindungsgemäße Vorrichtung auf, sowie eine Koje zum Abstellen eines becherartigen Gefäßes oder eines flächigen Geschirrs, wobei sich die Koje in Richtung der Schwerkraft gesehen unterhalb der Raspel befindet, so daß der erzeugte Schnee in das Gefäß oder auf das Geschirr fallen kann. Zusätzlich kann die elektrische Maschine ein Steuerprogramm zur vorbestimmten Bewegung des Stempels und der Raspel aufweisen.

In einer Ausführungsform der Maschine ist der Stempel mittels des Steuerprogramms mit einer Druckkurve während des Schneeherstellungsvorgangs fahrbar, wobei die Druckkurve abhängig von der Relativgeschwindigkeit Δv bzw. eine Relativwinkelgeschwindigkeit Δω zwischen Raspel 1 und Halteelement ist.

Eine bevorzugte Ausführungsform der elektrischen Maschine zeichnet sich dadurch aus, daß sie eine Kühlvorrichtung für die Koje und/oder die Vorrichtung zur Erzeugung von Schnee mit einer Raspel aüfweist.

In einer Ausführungsform der Erfindung weist die Maschine eine Vorrichtung zur Eingabe von flüssigem Spülmittel zumindest auf die Raspel auf, wobei die Aktivierung dieser Vorrichtung durch das Steuerprogramm ausgelöst wird.

Die erfindungsgemäße Vorrichtung zur Erzeugung von Schnee kann in einer Ausführungsform auch als Handgerät gestaltet sein, welches einen Griff aufweist, mit dem die flächige Raspel fest verbunden ist, und wobei die Grundplatte über einen Rahmen mit Schienen gleitverschieblich relativ zu der Raspel verbunden ist.

Die Erfindung wird nachstehend anhand von in den Zeichnungen dargestellten Ausführungsbeispielen näher erläutert. Es zeigen: Fig. 1 eine Schrägansicht der Vorrichtung zur Erzeugung von Schnee, Fig. 2 einen schematischen Schnitt durch die Vorrichtung, Fig. 3 eine Explosionszeichnung der Vorrichtung, Fig. 4 bis Fig. 6 Ausführungsformen der Raspel, Fig. 7 Ausführungsformen des Gebindes, Fig. 8 Ausführungsformen der Raspel, Fig. 9 eine Schrägansicht der Raspel mit Gebinde und Fig. 10 eine perspektivische Ansicht des Handgerätes.

Die Cremigkeit des Speiseeises wird in der Erfindung nicht durch künstliche Zusatzstoffe erreicht, sondern durch die Form des Speiseeises als Schnee. Die schneeflockenartige Konsistenz des Speiseeises bewirkt, daß dieses im Mund des Konsumenten schneller schmilzt als konventionelles Speiseeis. Dies führt zu dem cremigen Gefühl beim Konsum. Durch diesen Effekt ist es möglich, normalerweise nicht cremige Eiskompositionen als Speiseeis höherer Qualitätsstufen anzubieten. Dies sind z.B. Speiseeis mit Alkoholzusatz oder sämtlichen anderen hartfrierenden Speiseeisvariationen. Auch der Zusatz bestimmter Aromen oder Inhaltsstoffe, wie etwa Kakao, führten bislang dazu, daß die Cremigkeit des Eises darunter litt. Durch das erfindungsgemäße Verfahren und die Vorrichtung kann nun ein aromatisierter Schnee erzeugt werden, der dennoch eine ausreichende Cremigkeit aufweist.

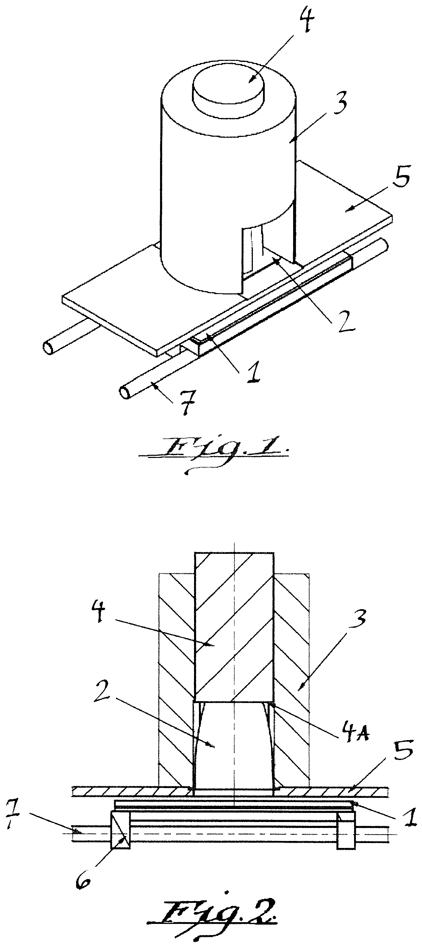

Gemäß Fig. 1 und Fig. 2 befindet sich eine gefrorene Flüssigkeit, z.B. auf Wasserbasis, als Eis-Stück (nicht gezeigt) in einem Gebinde 2, das innerhalb eines Führungszylinders 3 geführt wird. Es ist möglich, daß der Führungszylinder 3 auch als anders geformtes Halteelement ausgeführt sein kann, sofern nur das Gebinde 2 festgehalten und in einer Relativgeschwindigkeit zu einer Raspel 1 sicher gebracht werden kann. Durch einen Stempel 4 wird ein Anpreßdruck auf das Gebinde 2 und somit auf das Eis-Stück in dem Gebinde 2 erzeugt. Das Gebinde 2 ist zur Raspel 1 hin offen, so daß sich das Eis-Stück in Richtung der Raspel 1 bewegt und auf sie gepreßt wird. Währenddessen stützt sich das Gebinde 2 auf einer Grundplatte 5 ab, die zwischen Gebinde 2 und Raspel 1 angeordnet ist und einen Durchlaß für das Eis-Stück aufweist. Auf diese Weise wird ein Kontakt und ein Abrieb des Gebindes 2 auf der Raspel 1 verhindert. Das Gebinde 2 wird zusammen mit dem Halteelement (in diesem Fall der Führungszylinder 3) und/oder die Raspel 1 in eine Bewegung gebracht, wie sie bei allen Raspelvorgängen bekannt und üblich ist. Sobald zwischen dem Eis-Stück und der Raspel 1 eine Relativgeschwindigkeit Δv bzw. eine Relativwinkelgeschwindigkeit Δω vorliegt, wird das Eis-Stück durch die Raspel 1 abgeschabt, und der Schnee fällt unterhalb der Raspel 1 herunter.

Die Relativgeschwindigkeit zwischen Eis-Stück und Raspel 1 kann erzeugt werden, indem entweder das Eis-Stück oder die Raspel 1 oder beide linear oder rotatorisch bewegt werden. Erst durch die richtige Abstimmung von Anpreßdruck und Relativgeschwindigkeit Δv bzw. Δω werden pulverschneeartige Stücke von der gefrorenen Flüssigkeit abgeschabt. Dieser Pulverschnee fällt nun durch sein Eigengewicht und die vorherrschende Schwerkraft in einen Auffangbehälter oder eine beliebige Fläche.

Als Raspel 1 können verschiedene Arten von Raspeln, Reiben, Hobel oder ähnlichem verwendet werden. Es handelt sich um im wesentlichen flächige feste Materialstücke, auf denen sich mindestens ein spanabhebendes Element befindet. Dies sind typischerweise eine Vielzahl von gestanzten Schneidkanten, können aber auch von anderer Art sein, solange mit ihnen ein Eis-Stück fein genug gehobelt werden kann.

Das Gebinde 2, in welchem sich das Eis-Stück befindet, kann aus sämtlichen erdenklichen Materialien, wie z.B. Kunststoffen, Papier, Naturstoffen etc., ausgeführt sein. Das Gebinde 2 wird während des Reibvorganges und dem Anpressen durch den Stempel 4 plastisch deformiert. Es ist daher vorteilhaft, die Geometrie des Gebindes 2 so zu gestalten, daß sich das Eis-Stück kontinuierlich aus dem Gebinde 2 herauspressen läßt und keine Teile des Gebindes 2 in die Raspel 1 gelangen und somit Bestandteile des Gebindes 2 im fertigen Pulverschnee landen.

Um dem Ziel des gleichmäßigen und sicheren Vorschubes des Eis-Stückes durch den Stempel 4 zu erreichen, ist die Stirnseite, also die druckausübende Oberfläche 4a des Stempels 4, plan, konkav oder konvex ausgeführt.

Die Form und die Größe der Eiskristalle, die Schneeflocken des Pulverschnees bilden, ist weiters abhängig von der Zusammensetzung der Flüssigkeit an sich, die das Eis-Stück bildet, von der genauen Klingengeometrie der Klingen auf der Raspel 1 und anderen Parametern. Je nach Zusammenspiel dieser Bedingungen ergibt sich eine projizierte Deckfläche der Schneeflocke von 0,5 mm² bis 10 mm². Im wesentlichen beträgt das Volumen einer Schneeflocke bis zu 50 mm³.

Es kommt durch die pulverförmige Konsistenz der geriebenen gefrorenen Flüssigkeit zu einer Volumenszunahme von bis zu 800 % im Vergleich zum Ausgangsvolumen.

Der Herstellungsvorgang einer Schneeportion ist beeridet, wenn der Stempel 4 das Eis-Stück so vollständig wie möglich aus dem Gebinde 2 und durch die Raspel 1 bewegt hat. Das Restvolumen an nicht geriebenem Eis sollte minimal sein.

Wird das bislang beschriebene Gebinde 2 verwendet, welches man sich im wesentlichen als eine Art von "Tab" vorstellen kann, so kommt es zu einer überraschenden Verbesserung der Hygieneeigenschaften der Vorrichtung insgesamt. Konventionelles Speiseeis muß innerhalb kürzester Zeit verbraucht werden, damit sich keine Keime an der Oberfläche bilden. Wird das Gebinde der oben genannten Erfindung so gestaltet, daß dies eine Eisportion darstellt, so kann es zwingend zu keinem Antauen der Oberfläche kommen, da das Gebinde direkt vor der Zubereitung geöffnet wird.

Ein weiterer großer Vorteil der oben genannten Erfindung ist das Verarbeiten von gefrorenen Flüssigkeiten. Wie bereits beschrieben, werden dem konventionellen Speiseeis bei der Produktion Zusatzstoffe zugesetzt, um die Cremigkeit zu erhalten. Direkt nach der Produktion wird das konventionelle Speiseeis tiefgefroren. Von nun an darf die Kühlkette bis zum Verzehr nicht mehr unterbrochen werden. Würde dies geschehen, so würde neben der erhöhten Gefahr von Bakterienbefall auch die Cremigkeit des konventionellen Speiseeises verlorengehen, da sich beim Wiedereinfrieren Eiskristalle aus reinem Wasser bilden und das Gefühl der Cremigkeit zerstören. Die Erfindung ermöglicht es, daß die Grundsubstanz bis kurz vor dem Verzehr in flüssigem Zustand transportiert und gelagert werden kann. Erst vor dem Verzehr muß die Flüssigkeit samt dem Gebinde 2 tiefgefroren werden. Dies reduziert Lager- und Transportkosten, minimiert den Logistikaufwand und spart Energie.

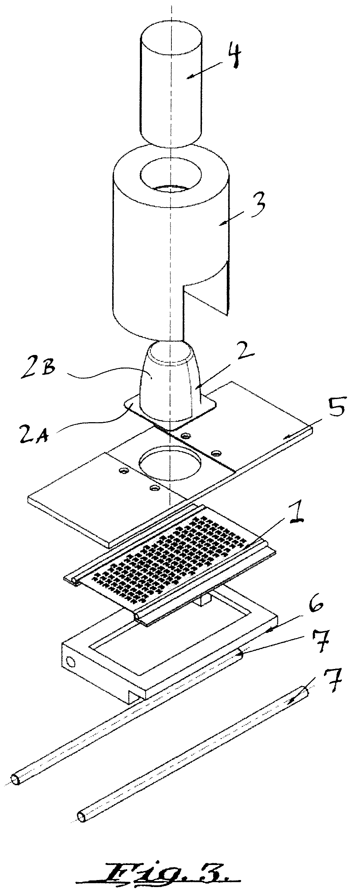

Bei der Ausführungsform gemäß Fig. 1, Fig. 2 und Fig. 3 befindet sich die Raspel 1 auf einem Rahmen 6, der wiederum auf Schienen 7 gleitverschieblich gelagert ist. Auf diese Weise kann die Raspel 1 auf vorbestimmte Weise oszillierend hin- und herbewegt und gleichzeitig vor oder nach Zubereitung einer Portion Schnee und Entfernung des Führungszylinders 3 und der Grundplatte 5 zu Reinigungszwecken hochgeklappt werden. Gemäß gleicher Ausführungsform ist das Gebinde 2 als nach unten offener Kunststoffbecher ausgeführt, der einen Konus 2B und einen Flansch 2A um die Öffnung des Gebindes 2 herum aufweist. Das Gebinde kann daher auf der Grundplatte 5 stabil ruhen und den Druck des Stempels 4 erfahren. In Richtung Raspel 1 wird während des Herstellungsvorganges dann nur das Eis-Stück durch eine Öffnung in der Grundplatte 5 hindurchbewegt.

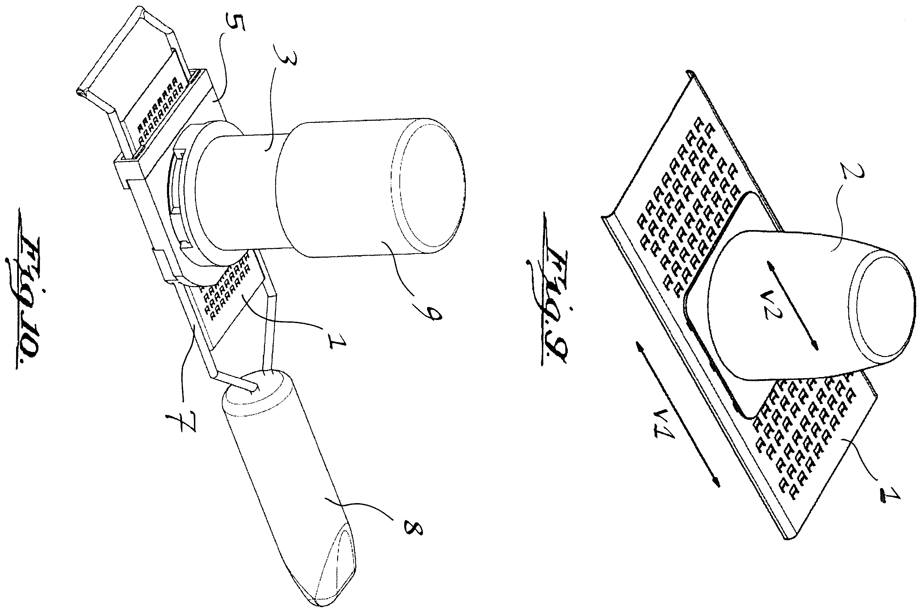

Die Relativgeschwindigkeit Δv bzw. Δω, die in der Ebene der Raspelfläche liegt und senkrecht zur Preßrichtung des Stempels 4 wirkt, wird dadurch erreicht, daß das Eis-Stück samt Gebinde 2 in eine Geschwindigkeit v2, die größer als 0 ist, gebracht wird, währenddessen sich die Reibe 1 nicht bewegt. Die Geschwindigkeit der Reibe v1 ist dabei 0. Alternativ wird die Reibe bewegt (v1 ≠ 0) und das Eis-Stück samt Gebinde 2 unbeweglich gehalten (v2 = 0). In einer dritten Alternativ wird sowohl die Reibe 1 als auch das Eis-Stück samt Gebinde 2 bewegt (v1 ≠ 0, v2 ≠ 0, siehe Fig. 9).

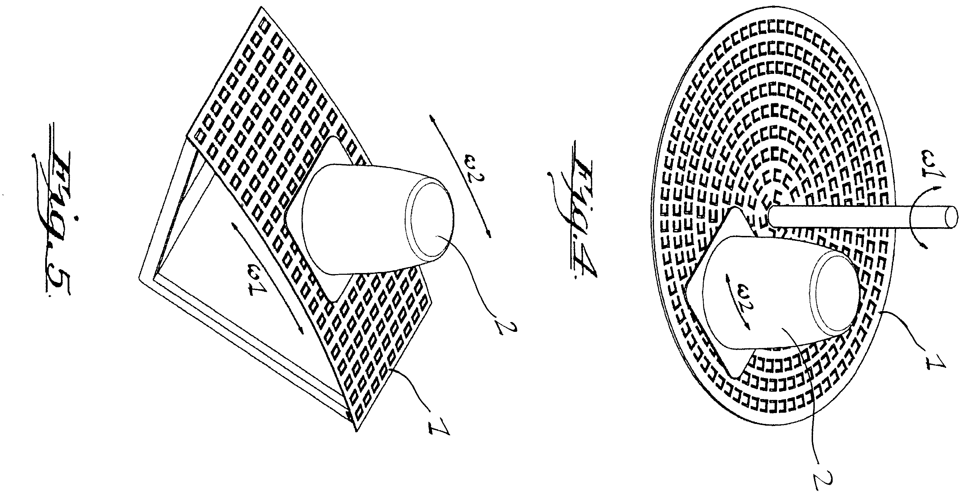

Die Teilgeschwindigkeiten v1 und v2 können durch Muskelkraft, pneumatisch, hydraulisch oder elektrisch erzeugt werden. Der Abschnitt der Raspel 1, der jeweils mit dem Eis-Stück schabend in Verbindung steht, ist im wesentlichen flächig ausgeführt. Die Raspel 1 insgesamt kann gemäß den Fig. 4 bis 6 und zum Beispiel 9 als Rechteckfläche, Kreisscheibe, Trommelsegment oder ganze Trommel ausgeführt sein. In der Trommelausführung befinden sich die spanabhebenden Elemente der Raspel 1 auf der Umfangsfläche eines Zylinders. Bei einer schwingenden oder rotierenden Bewegung gilt das für die Teilgeschwindigkeiten v1 und v2 Gesagte für die Winkelgeschwindigkeit ω1 der Raspel 1 bzw. für die Winkelgeschwindigkeit ω2 des Gebindes 2.

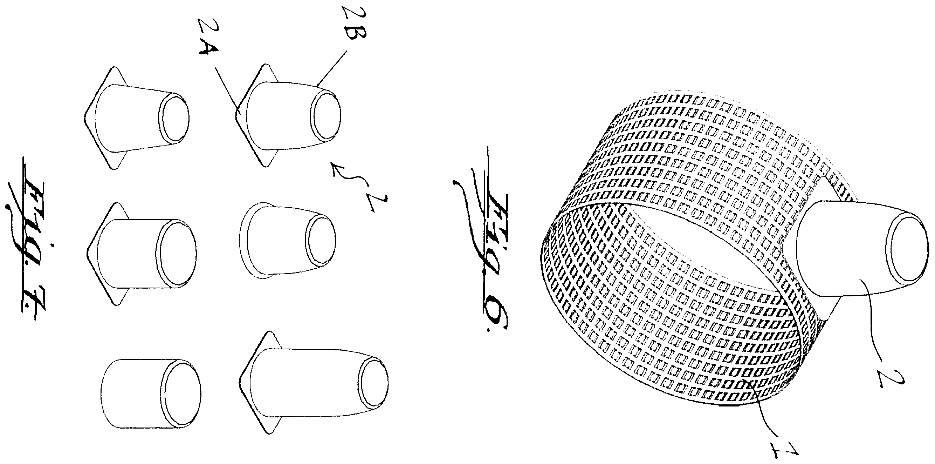

Gemäß Fig. 7 kann das Gebinde 2 viele verschiedene Formen annehmen. Als vorteilhaft hat sich das Vorhandensein eines Flansches 2A erwiesen, der jedoch nicht notwendig ist, solange nur das Gebinde 2 während des Anpressens fest auf der Grundplatte 5 aufliegt und nicht teilweise oder ganz in die Raspel 1 rutscht. Das Gebinde 2 kann zylindrisch, kegelförmig oder in einer Mischform davon ausgeführt sein. Vorteilhaft für die Funktionsweise, aber auch für die kostengünstige Herstellung des Gebindes 2 ist ein Gebinde 2 mit kreisförmigem Querschnitt.

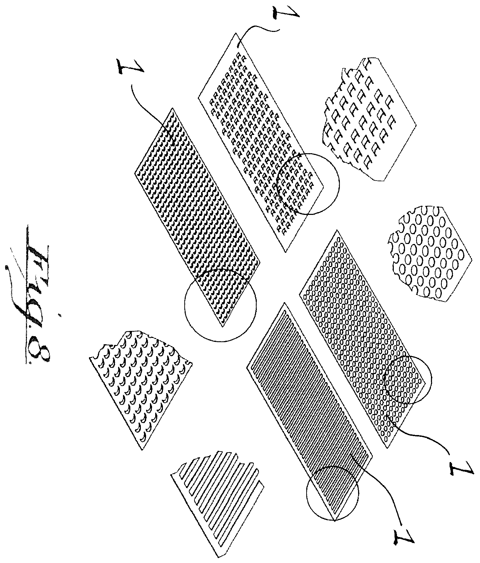

Gemäß Fig. 8 können die Zähne bzw. Klingen auf der Raspel 1 in unterschiedlicher Geometrie ausgeführt sein.

Um die Erzeugung einer Portion des Schnees weiterhin zu vereinfachen, kann die Erfindung Bestandteil einer elektrischen Maschine sein, die nach händischem Einsetzen des Gebindes 2 und Betätigen beispielsweise eines Startknopfes vollautomatisch zu arbeiten beginnt. Dafür wird der Stempel 4 motorisch angetrieben, wobei ein Steuerprogramm einen variablen Anpreßdruck nach vorbestimmten Parametern auf den Stempel 4 zwischen Anfangszeitpunkt der Schneeherstellung und Endzeitpunkt der Schneeherstellung auslöst. Der Anpreßdruck stellt sich während des jeweiligen Schneeherstellungsvorganges aus der Portion eines Gebindes 2 als Druckkurve dar, welche abhängig von der Relativgeschwindigkeit Δv bzw. eine Relativwinkelgeschwindigkeit Δω zwischen Raspel 1 und Halteelement bzw. Eis-Stück ist oder auch vom Fortschritt der Gebindepressung. So kann es vorteilhaft sein, den Druck von Beginn bis zum Ende des Anpressens zu steigern, hoch anzufangen und abzusenken oder kurvenartig zu variieren.

Weiterhin wird motorisch für die Relativgeschwindigkeit Δv bzw. Δω zwischen Eis-Stück und Raspel 1 gesorgt. Die Maschine weist dann noch eine Koje auf, die sich unterhalb der Raspel 1 befindet und den erzeugten Schnee in einem becherartigen Gefäß oder einem flächigen Geschirr auffängt. Die Koje kann ein von mehreren Seiten geschlossener Raum sein, der bei der Schneeherstellung Schutz gewährt. Es kann sich bei der Koje jedoch auch um einen Abstellplatz handeln, der lediglich für das Gefäß oder Geschirr frei gehalten wird.

Nach einer Schneeherstellung gemäß diesem Verfahren kann der Schnee der elektrischen Maschine entnommen werden, und weiterhin ist nur noch das deformierte Gebinde 2 zu entnehmen und zu entsorgen. Um den Betrieb dieser Maschine weiter zu vereinfachen und den Herstellungsprozeß sicher zu gestalten, können die wesentlichen Teile oder die Maschine insgesamt durch bekannte Kühlvorrichtungen, wie sie auch in Kühlschränken und ähnlichem verwendet werden, gekühlt werden. Ferner können alle Teile der Maschine und der schneerzeugenden Vorrichtung, die mit dem Eis und dem Schnee in Kontakt stehen, automatisch gespült werden. Dazu wird ein Spülmittel, wie beispielsweise Wasser oder Wasser mit darin gelösten Spülsubstanzen, mittels bekannter Schläuche, Kanäle und Pumpen zu den zu reinigenden Elementen der Maschine geführt und sorgt für eine sichere und saubere Sammlung des benutzten Spülwassers. Auf diese Weise kann die Erfindung auch im gastronomischen Bereich, wo Strom, Wasser- und Abwasseranschlüsse ausreichend vorhanden sind, verwendet werden. Die elektrische Maschine weist dann ein Steuerprogramm auf, welches unter anderem das Vorhandensein des richtigen Gebindes 2 erfaßt, für Bewegung des Stempels und Initiierung der Relativbewegung Δv bzw. Δω und des Gebindes 2 und der Reibe 1 sorgt, den Spülvorgang nach Erzeugung des Schnees auslöst und steuert sowie kontinuierlich für ausreichende Kühlung der Maschinenteile sorgt.

In Fig. 10 ist eine weitere Ausführungsform der Erfindung als Handgerät gezeigt. Die Schienen 7 sind direkt mit der Raspel 1 verbunden, welche wiederum an einem Handgriff befestigt ist. Das Gebinde wird in den Führungszylinder 3 eingesetzt, der z.B. durch Bajonettverschluß mit der Grundplatte 5 verbunden werden kann, und an seinem gegenüberliegenden Ende eine Kappe 9 aufweist, die in dem Stempel 4 (in Fig. 10 nicht gezeigt) übergeht. Die erste Hand des Anwenders hält per Handgriff 8 die Raspel 1 an einen gewünschten Ort, während die zweite Hand den Stempel über die Kappe 9 auf das Gebinde 2 drückt und gleichzeitig das Gebinde 2 gegenüber der Raspel 1 hin- und herbewegt.

## Patentansprüche

1. Vorrichtung zur Erzeugung von Schnee mit einer Raspel und einem in Richtung der Raspel wiederholt verschiebbaren Stempel, wobei auf die Raspel ein Eis-Stück mittels des Stempels drückbar ist, und wobei die Raspel und das Eis-Stück in einer Relativbewegung zueinander bringbar sind, **dadurch gekennzeichnet, daß** die Vorrichtung ein Halteelement, wie beispielsweise einen Führungszylinder (3) aufweist, in welchen ein zur Raspel (1) hin offenes Gebinde (2), in welchem sich das Eis-Stück befindet, eingesetzt ist, und wobei zwischen Halteelement und Raspel (1) eine Grundplatte (5) angeordnet ist, auf welcher das Gebinde (2) abgestützt und gegen den Druck des Stempels (4 gehalten ist.

2. Vorrichtung nach Anspruch 1, **dadurch gekennzeichnet, daß** die Raspel (1) und/oder der Stempel (4) motorisch antreibbar sind.

3. Vorrichtung nach Anspruch 1 oder 2, **dadurch gekennzeichnet, daß** die Raspel (1) flächig ausgeführt und schwingend bewegbar ist.

4. Vorrichtung nach Anspruch 1 oder 2, **dadurch gekennzeichnet, daß** die Raspel (1) als Trommel ausgeführt und rotierend bewegbar ist.

5. Vorrichtung nach Anspruch 1 oder 2, **dadurch gekennzeichnet, daß** die Raspel (1) als Kreisscheibe ausgeführt und rotierend bewegbar ist.

6. Vorrichtung nach einem der Ansprüche 1 bis 5, **dadurch gekennzeichnet, daß** das Halteelement motorisch antreibbar ist.

7. Vorrichtung nach einem der Ansprüche 1 bis 6, **dadurch gekennzeichnet, daß** der Stempel (4) eine auf das Gebinde (2) und/oder das Eis-Stück drückende Oberfläche (4A) aufweist, die plan, konkav oder konvex ausgeführt ist.

8. Elektrische Maschine zur Erzeugung von Schnee mit einer Vorrichtung nach Anspruch 2, mit einer Koje zum Abstellen eines becherartigen Gefäßes oder eines flächigen Geschirrs, wobei sich die Koje in Richtung der Schwerkraft gesehen unterhalb der Raspel (1) befindet, so daß der erzeugte Schnee in das Gefäß oder auf das Geschirr fallen kann.

9. Elektrische Maschine nach Anspruch 8, **dadurch gekennzeichnet, daß** sie ein Steuerprogramm zur vorbestimmten Bewegung des Stempels (4) sowie der Raspel (1) und/oder des Gebindes (2) aufweist.

10. Elektrische Maschine nach Anspruch 9, **dadurch gekennzeichnet, daß** mittels des Steuerprogramms der Stempel (4) mit einer Druckkurve während des Schneeherstellungsvorganges fahrbar ist, die abhängig von der Relativgeschwindigkeit Δv bzw. eine Relativwinkelgeschwindigkeit Δω zwischen Raspel 1 und Halteelement ist.

11. Elektrische Maschine nach einem der Ansprüche 8 bis 10, **dadurch gekennzeichnet, daß** sie eine Kühlvorrichtung für die Koje und/oder die Vorrichtung zur Erzeugung von Schnee mit einer Raspel aufweist.

12. Elektrische Maschine nach einem der Ansprüche 8 bis 11, **dadurch gekennzeichnet, daß** sie eine Vorrichtung zur Eingabe von flüssigem Spülmittel zumindest auf die Raspel (1) aufweist, wobei die Aktivierung dieser Vorrichtung durch das Steuerprogramm ausgelöst wird.

13. Handgerät zur Erzeugung von Schnee mit einer Vorrichtung nach Anspruch 1 mit einem Griff (8), der fest mit der als flächige Raspel ausgeführten Raspel (1) verbunden ist, und wobei die Grundplatte (5) über einen Rahmen (6) mit Schienen gleitverschieblich relativ zu der Raspel (1) verbunden ist.

14. Verfahren zur Erzeugung von Schnee, **gekennzeichnet durch** die Schritte:
Einsetzen eines nach einer Seite hin offenen Gebindes, in welchem sich ein Eis-Stück befindet, in ein Halteelement,
Pressen eines Stempels auf das Gebinde und pressendes Bewegen des Eis-Stückes aus einer Öffnung des Gebindes in Richtung einer Raspel heraus,
Erzeugen einer Relativbewegung der Raspel zum Gebinde, und
Auffangen des aus der Raspel fallenden Schnees mit einem becherartigen Gefäß oder einem flächigen Geschirr.

## Claims

1. Device for producing snow, comprising a rasp and a plunger which can be repeatedly displaced in the direction of the rasp, it being possible to press a piece of ice onto the rasp by means of the plunger, and it being possible to move the rasp and the piece of ice towards one another in a relative movement, **characterised in that** the device has a holding element, such as a guide cylinder (3), into which a container (2) is inserted which is open towards the rasp (1) and contains the piece of ice, a base plate (5) being arranged between the holding element and the rasp (1), on which base plate the container (2) is supported and held against the pressure of the plunger (4).

2. Device according to claim 1, **characterised in that** the rasp (1) and/or the plunger (4) can be driven by a motor.

3. Device according to either claim 1 or claim 2, **characterised in that** the rasp (1) is designed to be planar and is moveable in an oscillating manner.

4. Device according to either claim 1 or claim 2, **characterised in that** the rasp (1) is designed as a drum and is rotatably movable.

5. Device according to either claim 1 or claim 2, **characterised in that** the rasp (1) is designed as a circular disc and is rotatably movable.

6. Device according to any of claims 1 to 5, **characterised in that** the holding element can be driven by a motor.

7. Device according to any of claims 1 to 6, **characterised in that** the plunger (4) has a surface which presses onto to the container (2) and/or the piece of ice (4A) and is designed to be planar, concave or convex.

8. Electric machine for producing snow, comprising a device according to claim 2 which comprises a stand for placing a cup-shaped vessel or a planar dish, the stand being located below the rasp (1) when viewed in the direction of gravity, such that the produced snow can fall into the vessel or onto the dish.

9. Electric machine according to claim 8, **characterised in that** it has a control program for predetermined movement of the plunger (4) and of the rasp (1) and/or the container (2).

10. Electric machine according to claim 9, **characterised in that**, during the snow production process, the plunger (4) can be moved with a pressure curve by means of the control program, which pressure curve is dependent on the relative speed Δv or a relative angular velocity Δω between the rasp (1) and the holding element.

11. Electric machine according to any of claims 8 to 10, **characterised in that** it has a cooling device for the stand and/or the device for producing snow using a rasp.

12. Electric machine according to any of claims 8 to 11, **characterised in that** it has a device for the input of a liquid rinsing agent, at least on the rasp (1), the activation of this device being triggered by the control program.

13. Hand-held device for producing snow, comprising a device according to claim 1 that has a handle (8) which is rigidly connected to the rasp (1) which is designed as a planar rasp, and wherein the base plate (5) is connected so as to be able to slide relative to the rasp (1) by means of a frame (6) which has rails.

14. Method for producing snow, **characterised by** the steps of:
inserting a container, which is open towards one side and contains a piece of ice, into a holding element,
pressing a plunger onto the container and moving the piece of ice out of an opening in the container in the direction of a rasp by means of a pressing movement,
generating a movement of the rasp relative to the container, and collecting the snow falling out of the rasp using a cup-like vessel or a planar dish.

## Revendications

1. Dispositif pour la production de neige, avec une râpe et avec un piston pouvant être déplacé de manière répétée en direction de la râpe, sachant qu'un morceau de glace peut être pressé sur la râpe au moyen du piston, et sachant que la râpe et le morceau de glace peuvent être mis dans un mouvement relatif l'un par rapport à l'autre, **caractérisé en ce que** le dispositif présente un élément de retenue, comme par exemple un cylindre de guidage (3), dans lequel est mis en place un conteneur (2) ouvert en direction de la râpe (1) et dans lequel se trouve le morceau de glace, et sachant qu'une plaque de base (5), sur laquelle le conteneur (2) est soutenu et maintenu à l'encontre de la pression du piston (4), est disposée entre l'élément de retenue et la râpe (1).

2. Dispositif selon la revendication 1, **caractérisé en ce que** la râpe (1) et/ou le piston (4) peuvent être entraînés par moteur.

3. Dispositif selon la revendication 1 ou 2, **caractérisé en ce que** la râpe (1) est réalisée plate et peut être déplacée en oscillations.

4. Dispositif selon la revendication 1 ou 2, **caractérisé en ce que** la râpe (1) est réalisée sous forme de tambour et peut être déplacée en rotation.

5. Dispositif selon la revendication 1 ou 2, **caractérisé en ce que** la râpe (1) est réalisée sous forme de disque circulaire et peut être déplacée en rotation.

6. Dispositif selon l'une des revendications 1 à 5, **caractérisé en ce que** l'élément de retenue peut être entraîné par moteur.

7. Dispositif selon l'une des revendications 1 à 6, **caractérisé en ce que** le piston (4) présente une surface (4A) qui est réalisée plane, concave ou convexe et qui exerce une pression sur le conteneur (2) et/ou le morceau de glace.

8. Machine électrique pour la production de neige avec un dispositif selon la revendication 2, avec une zone de réception pour déposer un récipient du genre gobelet ou une assiette plate, sachant que la zone de réception se trouve, considéré dans la direction de la force de gravité, en dessous de la râpe (1), de sorte que la neige produite peut tomber dans le récipient ou sur l'assiette.

9. Machine électrique selon la revendication 8, **caractérisée en ce qu'**elle présente un programme de commande pour le déplacement prédéfini du piston (4) ainsi que de la râpe (1) et/ou du conteneur (2).

10. Machine électrique selon la revendication 9, **caractérisée en ce que**, au moyen du programme de commande, le piston (4) peut, pendant le processus de fabrication de neige, être déplacé avec une courbe de pression qui est fonction de la vitesse relative Δv ou d'une vitesse angulaire relative Δω entre la râpe (1) et l'élément de retenue.

11. Machine électrique selon l'une des revendications 8 à 10, **caractérisée en ce qu'**elle présente un dispositif de refroidissement pour la zone de réception et/ou pour le dispositif pour la production de neige avec une râpe.

12. Machine électrique selon l'une des revendications 8 à 11, **caractérisée en ce qu'**elle présente un dispositif pour le versement d'un produit de rinçage liquide au moins sur la râpe (1), sachant que l'activation de ce dispositif est déclenchée par le programme de commande.

13. Appareil à main pour la production de neige avec un dispositif selon la revendication 1, avec une poignée (8) qui est fixement reliée à la râpe (1) réalisée sous forme de râpe plate, et sachant que la plaque de base (5) est, par l'intermédiaire d'un bâti (6) pourvu de rails, reliée à coulissement par rapport à la râpe (1).

14. Procédé pour la production de neige, **caractérisé par** les étapes suivantes :
mise en place, dans un élément de retenue, d'un conteneur ouvert vers un côté et dans lequel se trouve un morceau de glace,
pressage d'un piston sur le récipient et déplacement par pressage du morceau de glace hors d'une ouverture du conteneur en direction d'une râpe,
production d'un mouvement relatif de la râpe par rapport au conteneur, et
collecte de la neige tombant de la râpe avec un récipient du genre gobelet ou une assiette plate.
